# EUROPEAN PATENT SPECIFICATION

(11) **EP 1 911 787 B1**
(45) Date of publication and mention of the grant of the patent: **28.03.2012**
(21) Application number: 07013640.3
(22) Date of filing: 12.07.2007
(51) Int. Cl.: C08G 65/00, C08G 65/26

(54) **High water content tolerant process for the production of polyethers**
Verfahren zur Herstellung von Polyethern mit Toleranz für einen hohen Wassergehalt
Procédé tolérant une teneur en eau élevée pour la production de polyéthers

(30) Priority: 20.07.2006 US 490303
(43) Date of publication of application: 16.04.2008
(73) Proprietor: Bayer MaterialScience LLC, Pittsburgh, PA 15205 (US)
(72) Inventor: Reese II., Jack R., Hurricane WV 25526 (US); Browne, Edward P., South Charleston WV 25309 (US); Pazos, Jose F., Charleston WV 25304 (US)
(74) Representative: Perchenek, Nils

(56) References cited:
- EP-A- 0 177 334
- WO-A-01/53381
- WO-A-99/14258

## Description

### FIELD OF THE INVENTION

The present invention relates in general to polyether production, and more specifically, to an improved process for the double metal cyanide ("DMC") catalyzed production of polyethers from low molecular weight starters having a high content of water.

### BACKGROUND OF THE INVENTION

Base-catalyzed oxyalkylation has been used to prepare polyoxyalkylene polyols for many years. In such a process, a suitably hydric low molecular weight starter molecule, such as propylene glycol ("PG"), is oxyalkylated with one or more alkylene oxides, such as ethylene oxide ("EO") or propylene oxide ("PO"), to form a polyoxyalkylene polyether polyol product. Because it is possible to employ a low molecular weight starter, the build ratio (polyol weight/starter weight) is relatively high, and thus the process effectively utilizes reactor capacity. Strongly basic catalysts such as sodium hydroxide or potassium hydroxide are typically used in such oxyalkylations.

Thus, most of polyoxyalkylene polyols useful in synthesis of polyurethane polymers, as well as those suitable for other uses, contain substantial amounts of oxypropylene moieties. As those skilled in the art are aware, during base-catalyzed oxypropylation, a competing rearrangement of propylene oxide to allyl alcohol generates monofunctional species which also become oxyalkylated, producing a wide range of polyoxyalkylene monols with molecular weights ranging from that of allyl alcohol itself or its low molecular weight oxyalkylated oligomers to polyether monols of very high molecular weight. In addition to broadening, the molecular weight distribution of the product, the continuous generation of monols lowers the product functionality. For example, a polyoxypropylene diol or triol of 2,000 Dalton (Da) equivalent weight may contain from 30 to 40 mole percent monol. The monol content lowers the functionality of the polyoxypropylene diols produced from their "nominal" or "theoretical" functionality of 2.0 to "actual" functionalities in the range of 1.6 to 1.7.

The monol content of polyoxyalkylene polyols is generally determined by measuring the unsaturation, for example by ASTM D-2849-69, "Testing of Urethane Foam Polyol Raw Materials", as each monol molecule contains allylic termination. Levels of unsaturation of about 0.060 meq/g to in excess of 0.10 meq/g for based-catalyzed polyols such as those described above are generally obtained. Numerous attempts have been made to lower unsaturation, and hence monol content, but few have been successful.

In the early 1960's, double metal cyanide ("DMC") complexes, such as the non-stoichiometric glyme complexes of zinc hexacyanocobaltate, were found which were able to prepare polyoxypropylene polyols with low monol contents, as reflected by unsaturation in the range of 0.018 to 0.020 meq/g. This represented a considerable improvement over the monol content obtainable by base catalysis.

In the 1970's, Herold, in U.S. Pat. No. 3,829,505, described the preparation of high molecular weight diols, triols, etc., using double metal cyanide catalysts. However, the catalyst activity, coupled with catalyst cost and the difficulty of removing catalyst residues from the polyol product, prevented commercialization of the products.

In the 1980's, interest in such catalysts resurfaced, and improved catalysts with higher activity coupled with improved methods of catalyst removal allowed commercialization for a short time. The polyols also exhibited somewhat lower monol content, as reflected by unsaturation values in the range of from 0.015 to 0.018 meq/g. However, the economics of the process were marginal, and in many cases, improvements expected in polymer products due to higher functionality and higher polyol molecular weight did not materialize.

In the 1990's, DMC catalysts were developed with far greater activity than was theretofore possible. Those catalysts, described by Le-Khac in U.S. Pat. Nos. 5,470,813 and 5,482,908, allowed the commercialization of DMC-catalyzed polyether polyols. Unlike the low unsaturation (0.015-0.018 meq/g) polyols prepared by prior DMC catalysts, these ultra-low unsaturation polyols often demonstrated dramatic improvements in polymer properties, although formulations were often different from the formulations useful with conventional polyols. These polyols typically have unsaturation in the range of 0.002 to 0.008 meq/g.

As those skilled in the art realize, one drawback associated with oxyalkylation with DMC catalysts is that a very high molecular weight component is generally observed. The bulk of DMC-catalyzed polyol product molecules are contained in a relatively narrow molecular weight band, and thus DMC-catalyzed polyols exhibit very low polydispersities, generally 1.20 or less. However, it has been determined that a very small fraction of molecules, i.e. less than 1,000 ppm, have molecular weights in excess of 100,000 Da. This very small, but very high molecular weight, fraction is thought to be responsible for some of the anomalous properties observed with ultra-low unsaturation, high functionality polyols. These ultra high molecular weight molecules do not significantly alter the polydispersity, however, due to the extremely small amounts present.

U.S. Pat. Nos. 5,777,177 and 5,689,012, disclose that the high molecular weight "tail" in polyoxypropylene polyols may be minimized by continuous addition of starter ("CAOS") during oxyalkylation. In batch and semi-batch processes, low molecular weight starter, e.g., propylene glycol or dipropylene glycol, is added continuously as the polyoxyalkylation proceeds rather than all being added at the onset. The continued presence of low molecular weight species has been found to lower the amount of high molecular weight tail produced, while also increasing the build ratio, because a large proportion of the final polyol product is derived from low molecular weight starter itself. Surprisingly, the polydispersity remains low, contrary to an expected large broadening of molecular weight distribution. In the continuous addition process, continuous addition of starter during continuous rather than batch production was found to also result in less low molecular weight tail, while allowing a build ratio which approaches that formerly obtainable only by traditional semi-batch processing employing base catalysis.

Another drawback of DMC-catalyzed oxyalkylation is the difficulty of using low molecular weight starters in polyether synthesis. Polyoxyalkylation of low molecular weight starters is generally sluggish, and often accompanied by catalyst deactivation. Thus, rather than employing low molecular weight starter molecules directly, oligomeric starters are prepared in a separate process by base-catalyzed oxypropylation of a low molecular weight starter to equivalent weights in the range of 200 Da to 700 Da or higher. Further oxyalkylation to the target molecular weight takes place in the presence of DMC catalysts. However, it is known to those skilled in the art that strong bases deactivate DMC catalysts. Thus, the basic catalyst used in oligomeric starter preparation must be removed by methods such as neutralization, adsorption, ion exchange, and the like.

For example, McDaniel et al., teach in U.S. Pat. No. 6,077,978, the addition of very small amounts (i.e., up to about 100 ppm) of acid to an initiator (glycerine) prior to its introduction into the reactor as continuously added starter to neutralize any residual basic contaminants. The addition of acid is the preferred method of McDaniel et al. for increasing the ability of the DMC catalyst to resist the base-caused deactivation during CAOS feeds at high CAOS/oxide ratios. However, McDaniel et al., fail to provide any guidance on the effects of water contamination on the starter feed stream, preferring simply to remove it. At col. 6, lines 49-51, McDaniel et al., state, "(t)he glycerine, following the addition, is preferably stripped to remove traces of water which may be introduced with the acid or generated as a result of neutralization by the acid." Further, McDaniel et al. characterize propylene glycol as a "non- acid sensitive" starter with "acid sensitive" being defined at col. 5, line 55 to col. 6, line 2 (additional description and classification of propylene glycol as a non-acid sensitive starter can also be found at col. 7, lines 7-20).

U.S. Published Patent Application No. 2005-0209438 A1, in the name of Browne, teaches a process for the manufacture of lower molecular weight DMC-catalyzed polyols than is possible using non-acidified continuous addition of starter feeds, by adding an excess of acid to a starter feed stream over that required for mere neutralization of the basic components of the starter. Browne too is silent regarding any effects on the DMC catalyst resulting from the presence of high levels of water in the starter and provides no teaching on the effects of acid levels below 100 ppm.

Water contamination of starters, such as propylene glycol can occur for a variety of reasons such as: starters generally are hydrophilic and will take up water quickly upon exposure to the atmosphere; water leaks on the storage tank for the starter can occur during production, for example, in a steam or a tempered water system used to maintain propylene glycol at a certain temperature; and the production specifications for starters such as propylene glycol permit differing amounts of water in the final product.

The presence of high levels of water in a reactor, whether as a contaminant of a starter feed stream or resulting from the acid neutralization of basic contaminants, can and oftentimes does lead to the deactivation of a double metal cyanide catalyst. As those skilled in the art are aware, one way in which water contamination can be overcome by the addition of more catalyst, but this can prove unsatisfactory. Therefore, a need exists in the art for a polyether production process that is more tolerant of high levels of water in the starter feed stream than are current processes.

### SUMMARY OF THE INVENTION

Accordingly, the present invention provides such a process for the production of a polyether involving establishing oxyalkylation, conditions in an oxyalkylation reactor in the presence of from 5 ppm to 500 ppm, based on the final polyether weight, of a double metal cyanide (DMC) catalyst, continuously introducing into the reactor at least one alkylene oxide and a low molecular weight starter having a number average molecular weight of less than 300 Daltons (Da) containing from 1,000 ppm to 5,000 ppm water and acidified with from 30 ppm to 2,000 ppm of at least one of an inorganic protic mineral acid and an organic acid, wherein said low molecular weight starter is selected from the group consisting of ethylene glycol, propylene glycol, dipropylene glycol, trimethylolpropane, pentaerythritol, and sorbitol, and recovering a polyether product having a number average molecular weight of from 200 Da to 4,000 Da, wherein the ppm (parts per million) of water and acid are based on the weight of the low molecular weight starter.

The inventive process provides for the use of starters containing higher levels of water than are useable in current processes by at least minimizing, and possibly preventing, the water-caused deactivation of the DMC catalyst. These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages, OH numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides a process for the production of a polyether involving establishing oxyalkylation conditions in an oxyalkylation reactor in the presence of from 5 ppm to 500 ppm, based on the final polyether weight, of a double metal cyanide (DMC) catalyst, continuously introducing into the reactor at least one alkylene oxide and a low molecular weight starter having a number average molecular weight of less than 300 Daltons (Da) containing from 1,000 ppm to 5,000 ppm water and acidified with from 30 ppm to 2,000 ppm of at least one of an inorganic protic mineral acid and an organic acid, wherein said low molecular weight starter is selected from the group consisting of ethylene glycol, propylene glycol, dipropylene glycol, trimethylolpropane, pentaerythritol, and sorbitol, and recovering a polyether product having a number average molecular weight of from 200 Da to 4,000 Da, wherein the ppm (parts per million) of water and acid are based on the weight of the low molecular weight starter.

The present inventors have surprisingly discovered that the addition of an amount of acid of from 30 ppm to 2,000 ppm to a high water content starter greatly minimizes or even prevents the DMC catalyst deactivation by water that is seen in currently practiced processes. The low molecular weight starter employed in the inventive process may contain preferably from 1,000 ppm to 3,000 ppm, most preferably from 1,000 ppm to 2,500 ppm of water, based on the weight of the starter. The low molecular weight starter may contain water in an amount ranging between any combination of the above-recited values, inclusive of the recited values.

The amount of acid added in the inventive process preferably is from 30 ppm to 200 ppm and most preferably from 30 ppm to 100 ppm, based on the weight of the low molecular weight starter. The acid may be added in an amount ranging between any combination of the above-recited values, inclusive of the recited values.

Although virtually any organic or inorganic acid may be suitable in the process of the present invention, specific examples of useful acids include, but are not limited to, the mineral acids and the organic carboxylic acids, phosphonic acids, sulfonic acids, and other acids. Phosphoric acid is preferred as a mineral acid, whereas citric acid and 1,3,5-benzene tricarboxylic acids may be useful as organic acids. Acid derivatives, such as acid chlorides and acid anhydrides and the like, are also useful. Organic acids such as phosphonic acids, sulfonic acids, e.g. p-toluenesulfonic acid, and the like, may also be used. Examples of mineral acids which are suitable include hydrochloric acid, hydrobromic acid, and sulfuric acid, among others, while useful carboxylic acids or their acidifying derivatives include formic acid, oxalic acid, citric acid, acetic acid, maleic acid, maleic anhydride, succinic acid, succinic anhydride, adipic acid, adipoyl chloride, adipic anhydride, and the like. Inorganic acid precursors such as thionyl chloride, phosphorous trichloride, carbonyl chloride, sulfur trioxide, phosphorus pentoxide, phosphorous oxytrichloride, and the like are considered as mineral acids herein.

Low molecular weight starters used in the inventive process have a number average molecular weight of from less than 300 Da, more preferably from less than 200 Da, and are selected from ethylene glycol, propylene glycol, dipropylene glycol, trimethylolpropane, pentaerythritol and sorbitol. Propylene glycol is particularly preferred as the low molecular weight starter in the process of the present invention. As molecules such as propylene glycol should not contain any residual basic contaminants, it is surprising that the instantly disclosed process proves beneficial for such starters.

Suitable alkylene oxides for the inventive process include, but are not limited to, ethylene oxide, propylene oxide, 1,2- and 2,3-butylene oxide, isobutylene oxide, epichlorohydrin, cyclohexene oxide, styrene oxide, and the higher alkylene oxides such as the C₅- C₃₀ α-alkylene oxides. Propylene oxide alone or mixtures of propylene oxide with ethylene oxide or another alkylene oxide are preferred. Other polymerizable monomers may be used as well, e.g. anhydrides and other monomers as disclosed in U.S. Pat. Nos. 3,404,109, 3,538,043 and 5,145,883, the contents of which are herein incorporated in their entireties by reference thereto.

The process of the present invention may employ any double metal cyanide (DMC) catalyst. Double metal cyanide complex catalysts are non-stoichiometric complexes of a low molecular weight organic complexing agent and optionally other complexing agents with a double metal cyanide salt, e.g. zinc hexacyanocobaltate. Suitable DMC catalysts are known to those skilled in the art. Exemplary DMC catalysts include those suitable for preparation of low unsaturation polyoxyalkylene polyether polyols, such as disclosed in U.S. Pat. Nos. 3,427,256; 3,427,334; 3,427,335; 3,829,505; 4,472,560; 4,477,589; and 5,158,922, the entire contents of each of which are incorporated herein by reference. The DMC catalysts more preferred in the process of the present invention are those capable of preparing "ultra-low" unsaturation polyether polyols. Such catalysts are disclosed in U.S. Pat. Nos. 5,470,813 and 5,482,908, 5,545,601, 6,689,710 and 6,764,978, the entire contents of each of which are incorporated herein by reference. Particularly preferred in the inventive process are those zinc hexacyanocobaltate catalysts prepared by the processes described in U.S. Pat. No. 5,482,908.

The DMC catalyst concentration is chosen so as to ensure good control of the polyoxyalkylation reaction under given reaction conditions. The catalyst concentration is from 5 ppm to 500 ppm, preferably in the range of from 10 ppm to 500 ppm, and most preferably in the range from 20 ppm to 100 ppm, based on the final polyether weight. The oxyalkylation in the process of the present invention may occur in the presence of DMC catalyst in an amount ranging between any combination of these values, inclusive of the recited values.

The continuous addition of starter (CAOS) process of the present invention may be batch, semi-batch or continuous as known to those skilled in the art. (See, *e.g.,* U.S. Pat. Nos. 5,689,012; 5,777,177; 5,919,988; and WO 99/14258A1). Although the inventors herein believe that the term "establishing oxyalkylation conditions" in an oxyalkylation reactor is self-explanatory, such conditions are established when the reactor temperature, alkylene oxide pressure, catalyst level, degree of catalyst activation, presence of oxyalkylatable compounds within the reactor, etc., are such that upon addition of unreacted alkylene oxide to the reactor, oxyalkylation takes place. By the term "continuously introducing" with respect to addition of alkylene oxide and starter herein is meant truly continuous, or an incremental addition which provides substantially the same results as continuous addition of these components. The terms "starter" and "initiator" as used herein are the same unless otherwise indicated.

The polyether products produced by the inventive process have a number average molecular weight of from 200 Da to 4,000 Da, preferably from 200 Da to 2,000 Da, most preferably from 250 Da to 1,500 Da. The polyether product produced by the inventive process may have a number average molecular weight ranging between any combination of these values, inclusive of the recited values. Polyether polyols produced by the process of the present invention may preferably be reacted with one or more isocyanates, as is known to those in the art, to provide improved polyurethane products including, but not limited to, coatings, adhesives, sealants, elastomers, foams and the like.

Suitable polyisocyanates are known to those skilled in the art and include unmodified isocyanates, modified polyisocyanates, and isocyanate prepolymers. Such organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136. Examples of such isocyanates include those represented by the formula

Q(NCO)ₙ

in which n is a number from 2-5, preferably 2-3, and Q is an aliphatic hydrocarbon group; a cycloaliphatic hydrocarbon group; an araliphatic hydrocarbon group; or an aromatic hydrocarbon group.

### EXAMPLES

The present invention is further illustrated, but is not to be limited, by the following examples.

### Example 1

A 112-hydroxyl number propoxylate of propylene glycol containing 30 ppm of DMC catalyst (catalyst prepared according to U.S. Pat. No. 5,482,908) was charged to a one-gallon stainless steel reactor equipped with a mechanical agitator and slowly heated. During the heating, a continuous vacuum was pulled on the headspace and nitrogen was introduced to the liquid phase via a dip tube. After the reactor temperature reached 130°C, the vacuum and nitrogen were continued for an additional ten minutes. The nitrogen was stopped and the reactor was blocked in at a pressure of 1.5 psia. An initial charge of propylene oxide was charged to the reactor over several minutes. After 10 minutes the pressure in the reactor decreased indicating that the DMC catalyst was active. The propylene oxide feed was restarted and set at a rate of 27.5 g/min (equivalent to a two-hour residence time). After establishing the oxide feed, a feed containing propylene glycol with 60 ppm phosphoric acid and 395 ppm DMC catalyst was started at a rate of 2.25 g/min. The water content of the propylene glycol feed was measured as 2,509 ppm.

The DMC catalyst was added to the propylene glycol as a dry powder and remained dispersed in the propylene glycol by constant agitation of the propylene glycol/DMC catalyst feed vessel. The DMC concentration in the propylene glycol was sufficient to provide 30 ppm in the final product. When the pressure in the reactor reached 47 psia, a valve at the top of the reactor was opened to a back pressure regulator and the contents of the liquid full reactor were allowed to flow out of the reactor. The polyether coming out of the reactor was passed through a steam-heated line before being collected in a heated and stirred jacketed vessel. The oxide and propylene glycol/catalyst feeds continued for approximately 21 hours at which point the reaction was stopped while the feed vessel containing the propylene glycol/DMC catalyst/acid mixture was refilled with the identical mixture of propylene glycol (2,509 ppm water), DMC catalyst (395 ppm) and phosphoric acid (60 ppm). The oxide (27.5 g/min) and PG/catalyst mixture (2.25 g/min) were restarted and the feeds continued for another 26 hours at which point the feeds were stopped.

A sample of the collected product had a measured hydroxyl number of 111.1 mgKOH/g and a viscosity of 172 cSt.

### Comparative Example 2

The PG/catalyst feed vessel from Example 1 was re-charged with the same propylene glycol (2,509 ppm water) and DMC catalyst concentration (395 ppm) as Example 1. However, no acid was added to the propylene glycol/DMC catalyst mixture. The oxide (27.5 g/min) and PG/catalyst mixture (2.25 g/min) feeds were restarted. After 2.5 hours of feeding the temperature of the tempered water system that heated and cooled the reactor switched from cooling the reaction to heating the reaction indicating a loss of DMC catalyst activity and reaction. The feeds were continued for another 30 minutes during which the reactor was in a constant heating mode before the oxide and PG/catalyst feeds to the reactor were stopped.

### Example 3

Under similar start-up conditions as described in Example 1 and with the propylene glycol and catalyst vessel containing the following: 197 ppm DMC catalyst, 60 ppm phosphoric acid and propylene glycol with 589 ppm water, the reaction was started. The DMC concentration in the propylene glycol was sufficient to provide 30 ppm in the final product. The propylene oxide was fed at 25.1 g/min and the propylene glycol / DMC catalyst mixture was fed at 4.5 g/min, equivalent to a two-hour residence time. The polyether was continuously removed from the reactor and collected in a manner similar to Example 1. The feeds continued for 21 hours at which time the reaction was stopped.

A sample of the collected product had a hydroxyl number of 210 mgKOH/g and a viscosity of 98 cSt.

### Comparative Example 4

The reaction from Example 3 was continued by re-charging the propylene glycol and DMC catalyst vessel with the same propylene glycol (589 ppm water) and DMC catalyst (197 ppm). However, no acid was added to the propylene glycol/DMC catalyst mixture. The oxide (25.1 g/min) and propylene glycol/DMC catalyst mixture (4.5 g/min) feeds were restarted. After two hours of feeding the temperature of the tempered water system that heated and cooled the reactor switched from cooling the reaction to heating the reaction indicating a loss of DMC catalyst activity and reaction. The feeds were continued for another 30 minutes during which the reactor was in a constant heating mode before the oxide and PG/catalyst feeds to the reactor were stopped.

### Example 5

Under similar start-up conditions as those described in Example 1 and with the propylene glycol and catalyst vessel containing the following: 395 ppm DMC catalyst, 120 ppm phosphoric acid and propylene glycol with 2,509 ppm water, the reaction was started. The propylene oxide was fed at 27.4 g/min and the propylene glycol/DMC catalyst mixture was fed at 2.25 g/min, equivalent to a two-hour residence time. The polyether was continuously removed from the reactor and collected in a manner similar to Example 1. The feeds were continued for 21 hours at which time the reaction was stopped.

A sample of the collected product had a hydroxyl number of 108 mgKOH/g and a viscosity of 170 cSt.

### Example 6

The reaction from Example 5 was continued by re-charging the propylene glycol and DMC catalyst vessel with the same propylene glycol (2,509 ppm water) and DMC catalyst (395 ppm). However, 90 ppm phosphoric acid was added to the propylene glycol/DMC catalyst mixture. The oxide (27.4 g/min) and propylene glycol/DMC catalyst mixture (2.25 g/min) feeds were restarted. The polyether was continuously removed from the reactor and collected in a manner similar to Example 1. The feeds were continued for 22 hours at which time the reaction was stopped.

A sample of the collected product had a hydroxyl number of 110 mgKOH/g and a viscosity of 173 cSt.

### Example 7

Under similar start-up conditions as those described in Example 1 and with the propylene glycol and catalyst vessel containing the following: 395 ppm DMC catalyst, 30 ppm phosphoric acid and propylene glycol with 2,509 ppm water, the reaction was started. The propylene oxide was fed at 27.4 g/min and the propylene glycol/DMC catalyst mixture was fed at 2.25 g/min, equivalent to a two-hour residence time. The polyether was continuously removed from the reactor and collected in a manner similar to Example 1. The feeds continued for 24 hours at which time the reaction was stopped.

A sample of the collected product had a hydroxyl number of 107 mgKOH/g and a viscosity of 198 cSt.

### Comparative Example 8

Under similar start-up conditions as those described in Example 1 and with the propylene glycol and catalyst vessel containing the following: 790 ppm DMC catalyst, 0 ppm phosphoric acid and propylene glycol with 2,509 ppm water, the reaction was started. The DMC catalyst concentration in the propylene glycol/DMC catalyst mixture was equivalent to provide 60 ppm in the final polyether. The propylene oxide was fed at 27.4 g/min and the propylene glycol/DMC catalyst mixture was fed at 2.25 g/min, equivalent to a two-hour residence time. The polyether was continuously removed from the reactor and collected in a manner similar to Example 1. The feeds continued for 25 hours at which time the reaction was stopped.

A sample of the collected product had a hydroxyl number of 111.9 mgKOH/g and a viscosity of 173 cSt.

### Comparative Example 9

Under similar start-up conditions as those described in Example 1 and with the propylene glycol and catalyst vessel containing the following: 395 ppm DMC catalyst, 0 ppm phosphoric acid and propylene glycol with 488 ppm water, the reaction was started. The DMC catalyst concentration in the propylene glycol/DMC catalyst mixture was equivalent to provide 30 ppm in the final polyether. The propylene oxide was fed at 27.4 g/min and the propylene glycol/DMC catalyst mixture was fed at 2.25 g/min, equivalent to a two-hour residence time. The polyether was continuously removed from the reactor and collected in a manner similar to Example 1. The feeds were continued for 20 hours at which time the reaction was stopped.

As will be appreciated by those skilled in the art, inventive Examples 1, 3 and 5-7 demonstrated that DMC-catalyzed polyethers could be produced in a continuous fashion by adding acid to a low molecular weight starter having a high water content. Acid levels from 30 to 120 ppm, based on the weight of the low molecular weight starter, were used without detriment to final polyether.

Comparative Examples 2 and 4 show that the reaction could not continue beyond one to two residence times when the acid was removed from the low molecular weight starter.

Comparative Examples 8 and 9 illustrate that acid was not required when the catalyst concentration was increased, when the water content of the low molecular weight starter was decreased or when the molecular weight of the polyether was increased (amount of the starter added is decreased). The acid level requirement depended on the target molecular weight of the polyether to be made and the amount of water in the low molecular weight starter.

The foregoing examples of the present invention are offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. A process for the production of a polyether comprising:
establishing oxyalkylation conditions in an oxyalkylation reactor in the presence of from 5 ppm to 500 ppm, based on the final polyether weight, of a double metal cyanide (DMC) catalyst;
continuously introducing into the reactor,
at least one alkylene oxide and
a low molecular weight starter having a number average molecular weight of less than 300 Daltons (Da), containing from 1000 ppm to 5,000 ppm water and acidified with from 30 ppm to 2,000 ppm of at least one of an inorganic protic mineral acid and an organic acid, wherein said low molecular weight starter is selected from the group consisting of ethylene glycol, propylene glycol, dipropylene glycol, trimethylolpropane, pentaerythritol and sorbitol; and
recovering a polyether product having a number average molecular weight of from 200 Da to 4,000 Da,
wherein the ppm (parts per million) of water and acid are based on the weight of the low molecular weight starter.

2. The process according to Claim 1, wherein the low molecular weight starter has a number average molecular weight of less than 200 Da.

3. The process according to Claim 1, wherein the low molecular weight starter is propylene glycol.

4. The process according to Claim 1, wherein the acid is chosen from mineral acids, organic carboxylic acids, phosphonic acids, sulfonic acids and combinations thereof.

5. The process according to Claim 1, wherein the acid is chosen from citric acid, 1,3,5-benzene tricarboxylic acids, phosphonic acids, p-toluenesulfonic acid, hydrochloric acid, hydrobromic acid, sulfuric acid, formic acid, oxalic acid, citric acid, acetic acid, maleic acid, maleic anhydride, succinic acid, succinic anhydride, adipic acid, adipoyl chloride, adipic anhydride, thionyl chloride, phosphorous trichloride, carbonyl chloride, sulfur trioxide, phosphorus pentoxide, phosphorous oxytrichloride and combinations thereof.

6. The process according to Claim 1, wherein the acid is phosphoric acid.

7. The process according to Claim 1, wherein the oxyalkylation conditions are established in the presence of from 10 ppm to 500 ppm, based on the final polyether weight, of double metal cyanide (DMC) catalyst.

8. The process according to Claim 1, wherein the DMC catalyst is a zinc hexacyanocobaltate.

9. The process according to Claim 1, wherein the alkylene oxide is chosen from ethylene oxide, propylene oxide, 1,2- and 2,3-butylene oxide, isobutylene oxide, epichlorohydrin, cyclohexene oxide, styrene oxide and C₅-C₃₀ α-alkylene oxides.

10. The process according to Claim 1, wherein the alkylene oxide is propylene oxide.

11. The process according to Claim 1, wherein the low molecular weight starter contains from 1000 ppm, to 3,000 ppm, based on the weight of starter, of water.

12. The process according to Claim 1, wherein the low molecular weight starter contains from 1,000 ppm to 2,500 ppm, based on the weight of starter, of water.

13. The process according to Claim 1, wherein from 30 ppm to 200 ppm, based on the weight of the low molecular weight starter, of acid is added.

14. The process according to Claim 1, wherein from 30 ppm to 100 ppm, based on the weight of the low molecular weight starter, of acid is added.

15. The process according to Claim 1, wherein the polyether product has a number average molecular weight of from 200 Da to 2,000 Da.

16. The process according to Claim 1, wherein the polyether product has a number average molecular weight of from 250 Da to 1,500 Da.

17. The process according to Claim 1, wherein the process is continuous.

18. The process according to Claim 1, wherein the process is semibatch.

19. A process of producing a polyurethane by the reaction of at least one isocyanate and at least one isocyanate-reactive compound, the process comprising producing the isocyanate-reactive compound by the process according to Claim 1.

## Patentansprüche

1. Verfahren zur Herstellung eines Polyethers, bei dem man:
in einem Oxyalkylierungsreaktor in Gegenwart von 5 ppm bis 500 ppm, bezogen auf das Endgewicht des Polyethers, eines Doppelmetallcyanid-Katalysators (DMC-Katalysators) Oxyalkylierungsbedingungen einstellt;
in den Reaktor kontinuierlich
mindestens ein Alkylenoxid und
einen niedermolekularen Starter mit einem zahlenmittleren Molekulargewicht von weniger als 300 Dalton (Da), der 1000 ppm bis 5000 ppm Wasser enthält und mit 30 ppm bis 2000 ppm einer anorganischen protischen Mineralsäure und/oder einer organischen Säure angesäuert ist, wobei der niedermolekulare Starter aus der Gruppe bestehend aus Ethylenglykol, Propylenglykol, Dipropylenglykol, Trimethylolpropan, Pentaerythrit und Sorbit ausgewählt wird,
einträgt und
ein Polyetherprodukt mit einem zahlenmittleren Molekulargewicht von 200 Da bis 4000 Da gewinnt, wobei die ppm (Teile pro Million) Wasser und Säure sich auf das Gewicht des niedermolekularen Starters beziehen.

2. Verfahren nach Anspruch 1, bei dem der niedermolekulare Starter ein zahlenmittleres Molekulargewicht von weniger als 200 Da aufweist.

3. Verfahren nach Anspruch 1, bei dem es sich bei dem niedermolekularen Starter um Propylenglykol handelt.

4. Verfahren nach Anspruch 1, bei dem man die Säure unter Mineralsäuren, organischen Carbonsäuren, Phosphonsäuren, Sulfonsäuren und Kombinationen davon auswählt.

5. Verfahren nach Anspruch 1, bei dem man die Säure unter Citronensäure, 1,3,5-Benzoltricarbonsäuren, Phosphonsäuren, p-Toluolsulfonsäure, Chlorvuasserstoffsäure, Bromwasserstoffsäure, Schwefelsäure, Ameisensäure, Oxalsäure, Essigsäure, Maleinsäure, Maleinsäureanhydrid, Bernsteinsäure, Bernsteinsäureanhydrid, Adipinsäure, Adipolychlorid, Adipinsäureanhydrid, Thionylchlorid, Phosphortrichlorid, Carbonylchlorid, Schwefeltrioxid, Phosphorpentoxid, Phosphoroxidtrichlorid und Kombinationen davon auswählt.

6. Verfahren nach Anspruch 1, bei dem es sich bei der Säure um Phosphorsäure handelt.

7. Verfahren nach Anspruch 1, bei dem man die Oxyalkylierungsbedingungen in Gegenwart von 10 ppm bis 500 ppm, bezogen auf das Endgewicht des Polyethers, eines Doppelmetallcyanid-Katalysators (DMC-Katalysators) einstellt.

8. Verfahren nach Anspruch 1, bei dem es sich bei dem DMC-Katalysator um ein Zinkhexacyanocobaltat handelt.

9. Verfahren nach Anspruch 1, bei dem man das Alkylenoxid unter Ethylenoxid, Propylenoxid, 1,2-und 2,3-Butylenoxid, Isobutylenoxid, Epichlorhydrin, Cyclohexenoxid, Styroloxid und C₅-C₃₀-α-Alkylenoxiden auswählt.

10. Verfahren nach Anspruch 1, bei dem es sich bei dem Alkylenoxid um Propylenoxid handelt.

11. Verfahren nach Anspruch 1, bei dem der niedermolekulare Starter 1000 ppm bis 3000 ppm, bezogen auf das Gewicht des Starters, Wasser enthält.

12. Verfahren nach Anspruch 1, bei dem der niedermolekulare Starter 1000 ppm bis 2500 ppm, bezogen auf das Gewicht des Starters, Wasser enthält.

13. Verfahren nach Anspruch 1, bei dem man 30 ppm bis 200 ppm, bezogen auf das Gewicht des niedermolekularen Starters, Säure zusetzt.

14. Verfahren nach Anspruch 1, bei dem man 30 ppm bis 100 ppm, bezogen auf das Gewicht des niedermolekularen Starters, Säure zusetzt.

15. Verfahren nach Anspruch 1, bei dem das Polyetherprodukt ein zahlenmittleres Molekulargewicht von 200 Da bis 2000 Da aufweist.

16. Verfahren nach Anspruch 1, bei dem das Polyetherprodukt ein zahlenmittleres Molekulargewicht von 250 Da bis 1500 Da aufweist.

17. Verfahren nach Anspruch 1, das kontinuierlich betrieben wird.

18. Verfahren nach Anspruch 1, das in Semibatch-Fahrweise betrieben wird.

19. Verfahren zur Herstellung eines Polyurethans durch Umsetzung mindestens eines Isocyanats und mindestens einer gegenüber Isocyanat reaktiven Verbindung, bei dem man die gegenüber Isocyanat reaktive Verbindung durch das Verfahren gemäß Anspruch 1 herstellt.

## Revendications

1. Procédé de production d'un polyéther comprenant :
l'établissement de conditions d'oxyalkylation dans un réacteur d'oxyalkylation en présence de 5 ppm à 500 ppm, par rapport au poids final de polyéther, d'un catalyseur à cyanure métallique double (DMC) ;
l'introduction en continu dans le réacteur
d'au moins un oxyde d'alkylène et
d'un composé de départ de bas poids moléculaire ayant un poids moléculaire moyen en nombre inférieur à 300 Daltons (Da), contenant 1000 ppm à 5000 ppm d'eau et acidifié avec 30 ppm à 2000 ppm d'un acide minéral inorganique protique et/ou d'un acide organique, ledit composé de départ de bas poids moléculaire étant choisi dans le groupe constitué par l'éthylène glycol, le propylène glycol, le dipropylène glycol, le triméthylol-propane, le pentaérythritol et le sorbitol ; et
la récupération d'un produit polyéther ayant un poids moléculaire moyen en nombre de 200 Da à 4000 Da, dans lequel les ppm (parties par million) d'eau et d'acide sont basées sur le poids du composé de départ de bas poids moléculaire.

2. Procédé selon la revendication 1, dans lequel le composé de départ de bas poids moléculaire a un poids moléculaire moyen en nombre inférieur à 200 Da.

3. Procédé selon la revendication 1, dans lequel le composé de départ de bas poids moléculaire est le propylène glycol.

4. Procédé selon la revendication 1, dans lequel l'acide est choisi parmi les acides minéraux, les acides carboxyliques organiques, les acides phosphoniques, les acides sulfoniques et leurs combinaisons.

5. Procédé selon la revendication 1, dans lequel l'acide est choisi parmi l'acide citrique, les acides 1,3,5-benzène-tricarboxyliques, les acides phosphoniques, l'acide p-toluènesulfonique, l'acide chlorhydrique, l'acide bromhydrique, l'acide sulfurique, l'acide formique, l'acide oxalique, l'acide acétique, l'acide maléique, l'anhydride maléique, l'acide succinique, l'anhydride succinique, l'acide adipique, le chlorure d'adipoyle, l'anhydride adipique, le chlorure de thionyle, le trichlorure de phosphore, le chlorure de carbonyle, le trioxyde de soufre, le pentoxyde de phosphore, l'oxytrichlorure de phosphore et leurs combinaisons.

6. Procédé selon la revendication 1, dans lequel l'acide est l'acide phosphorique.

7. Procédé selon la revendication 1, dans lequel les conditions d'oxyalkylation sont établies en présence de 10 ppm à 500 ppm, par rapport au poids final de polyéther, d'un catalyseur à cyanure métallique double (DMC).

8. Procédé selon la revendication 1, dans lequel le catalyseur DMC est un hexacyanocobaltate de zinc.

9. Procédé selon la revendication 1, dans lequel l'oxyde d'alkylène est choisi parmi l'oxyde d'éthylène, l'oxyde de propylène, l'oxyde de 1,2- et 2,3-butylène, l'oxyde d'isobutylène, l_{'}épichlorhydrine, l'oxyde de cyclohexène, l'oxyde de styrène et les oxydes d'α-alkylène en C₅-C₃₀.

10. Procédé selon la revendication 1, dans lequel l'oxyde d'alkylène est l'oxyde de propylène.

11. Procédé selon la revendication 1, dans lequel le composé de départ de bas poids moléculaire contient 1000 ppm à 3000 ppm, par rapport au poids du composé de départ, d'eau.

12. Procédé selon la revendication 1, dans lequel le composé de départ de bas poids moléculaire contient 1000 ppm à 2500 ppm, par rapport au poids du composé de départ, d'eau.

13. Procédé selon la revendication 1, dans lequel 30 ppm à 200 ppm, par rapport au poids du composé de départ de bas poids moléculaire, d'acide sont ajoutés.

14. Procédé selon la revendication 1, dans lequel 30 ppm à 100 ppm, par rapport au poids du composé de départ de bas poids moléculaire, d'acide sont ajoutés.

15. Procédé selon la revendication 1, dans lequel le produit polyéther a un poids moléculaire moyen en nombre de 200 Da à 2000 Da.

16. Procédé selon la revendication 1, dans lequel le produit polyéther a un poids moléculaire moyen en nombre de 250 Da à 1500 Da.

17. Procédé selon la revendication 1, le procédé étant continu.

18. Procédé selon la revendication 1, le procédé étant semi-discontinu.

19. Procédé de production d'un polyuréthane par la réaction d'au moins un isocyanate et d'au moins un composé réactif avec les isocyanates, le procédé comprenant la production du composé réactif avec les isocyanates par le procédé selon la revendication 1.
